Europäisches Patentamt

European Patent Office

Office européen des brevets

(11) Numéro de publication: **0 090 751**
**A2**

(12) # DEMANDE DE BREVET EUROPEEN

(21) Numéro de dépôt: 83420056.0

(22) Date de dépôt: 28.03.83

(51) Int. Cl.³: **B 23 B 29/32**

(30) Priorité: 30.03.82 FR 8205824

(71) Demandeur: **Moulin, Georges, 17 bis, rue de Terrenoire, F-42100 Saint Etienne (FR)**

(43) Date de publication de la demande: **05.10.83 Bulletin 83/40**

(72) Inventeur: **Moulin, Georges, 17 bis, rue de Terrenoire, F-42100 Saint Etienne (FR)**

(74) Mandataire: **Buttet, Roger et al, "Cabinet Charras" 3, Place de l'Hôtel-de-Ville, F-42000 Saint-Etienne (FR)**

(84) Etats contractants désignés: **DE GB IT SE**

(54) **Machine-outil universelle avec une pluralité de postes d'usinage constituant un centre d'usinage.**

(57) Une tourelle d'usinage (6) porte-outils à broches horizontales, avec moyen d'entraînement en position circulaire indexée et dispositif d'embrayage et d'entraînement respectif de chaque broche en phase d'usinage, est fixée tournante sur un chariot (5) avec dispositif de déplacement longitudinal sur une console (4) mobile verticalement et guidée sur un bâti (1), au moyen d'un dispositif de déplacement en hauteur; un chariot transversal (2) à déplacement unidirectionnel, perpendiculaire au déplacement du chariot (5), coulisse à la partie supérieure dudit bâti, au moyen d'un dispositif de commande; un plateau-support (3) étant fixé sur le chariot (2) avec moyen d'entraînement en position circulaire indexée, pour supporter la pièce à usiner, suivant les coordonnées des opérations d'usinage s'effectuant par déplacement de la tourelle (6).

0090751

- 1 -

Machine-outil universelle avec une pluralité de postes
d'usinage constituant un centre d'usinage.

L'invention concerne une machine-outil universelle avec une
pluralité de postes d'usinage constituant un centre d'usinage.

Dans les machines-outils universelles connues, les différents
dispositifs de changement d'outils sont compliqués et s'effectuent par l'intermédiaire de bras transferts ou autres moyens
engendrant des difficultés de construction. De plus, ces
machines-outils ne permettent pas d'effectuer des opérations
d'usinage suivant toutes capacités géométriques.

La présente invention a pour but de remédier à ces inconvénients.
L'invention telle qu'elle est caractérisée dans les revendications, comprend une tourelle d'usinage porte-outils à broches horizontales, à position circulaire indexée, réglable
verticalement et à avancement longitudinal automatique, en
regard de la ou des pièces à usiner montées sur un plateau
tournant et indexé, solidaire d'un chariot horizontal à
déplacement transversal. Des moyens de commande des axes de
déplacement par moteurs-couples, agissant séparément.

L'invention est exposée ci-après plus en détail, à l'aide
de dessins représentant un mode d'exécution.

La figure 1 représente une vue schématique de face, de la machine-outil universelle conformément à la présente invention ;

La figure 2 représente une vue en plan correspondant à la figure 1.

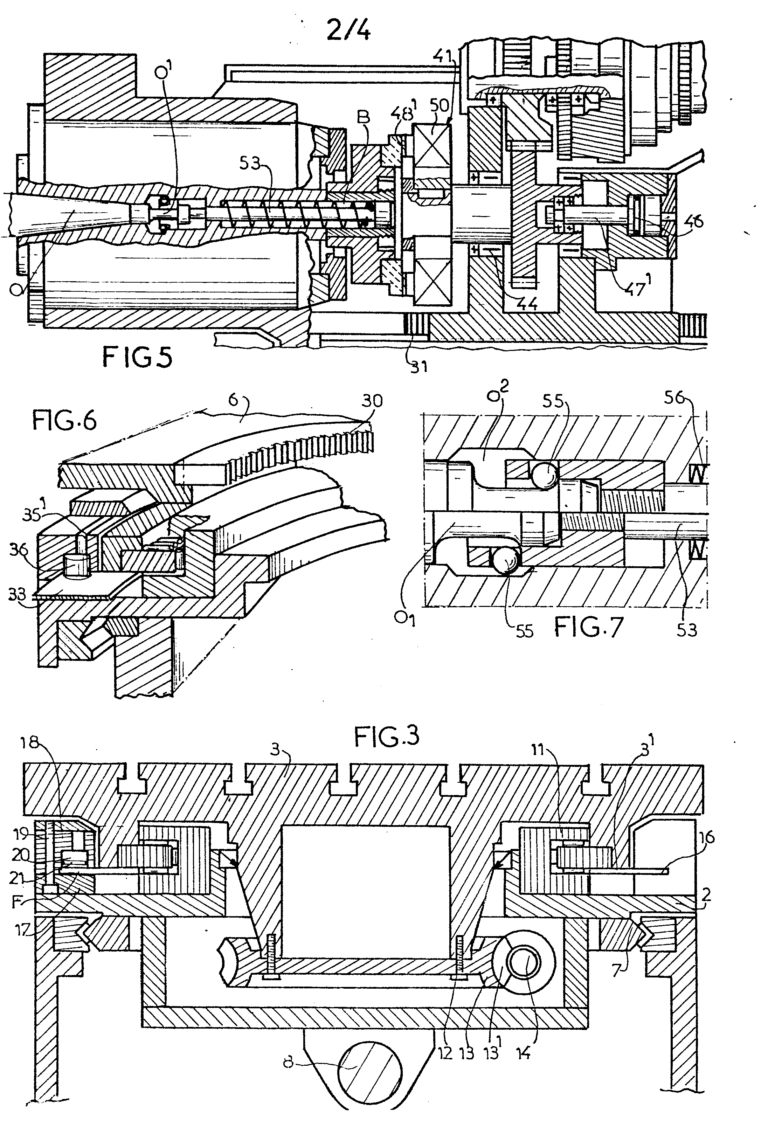

La figure 3 représente une vue en coupe transversale suivant la ligne 3-3 de la figure 2 et illustrant la commande en rotation, en indexation circulaire et en translation, du plateau tournant support des pièces à usiner.

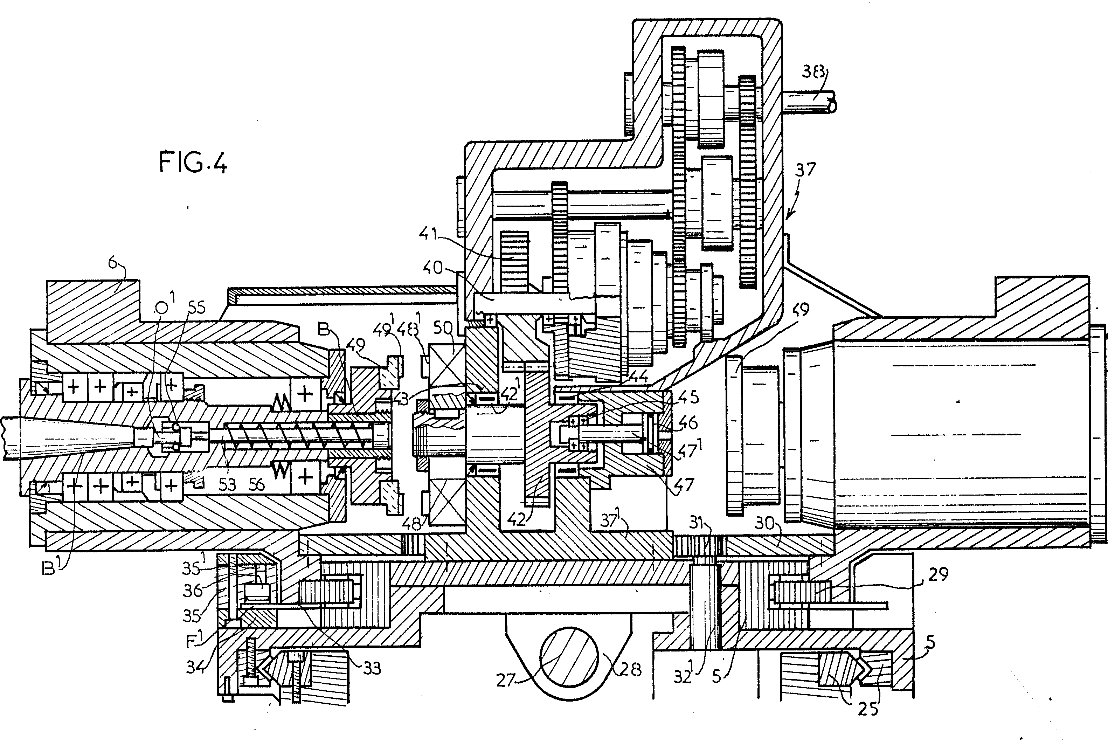

La figure 4 représente une vue en coupe transversale suivant la ligne 4-4 de la figure 2, illustrant la commande en rotation et en indexation circulaire de la tourelle, ainsi que le dispositif d'embrayage en vue de l'entraînement en rotation de chaque porte-outil en position d'usinage ; la commande de déplacement du chariot porte-tourelle est également représentée.

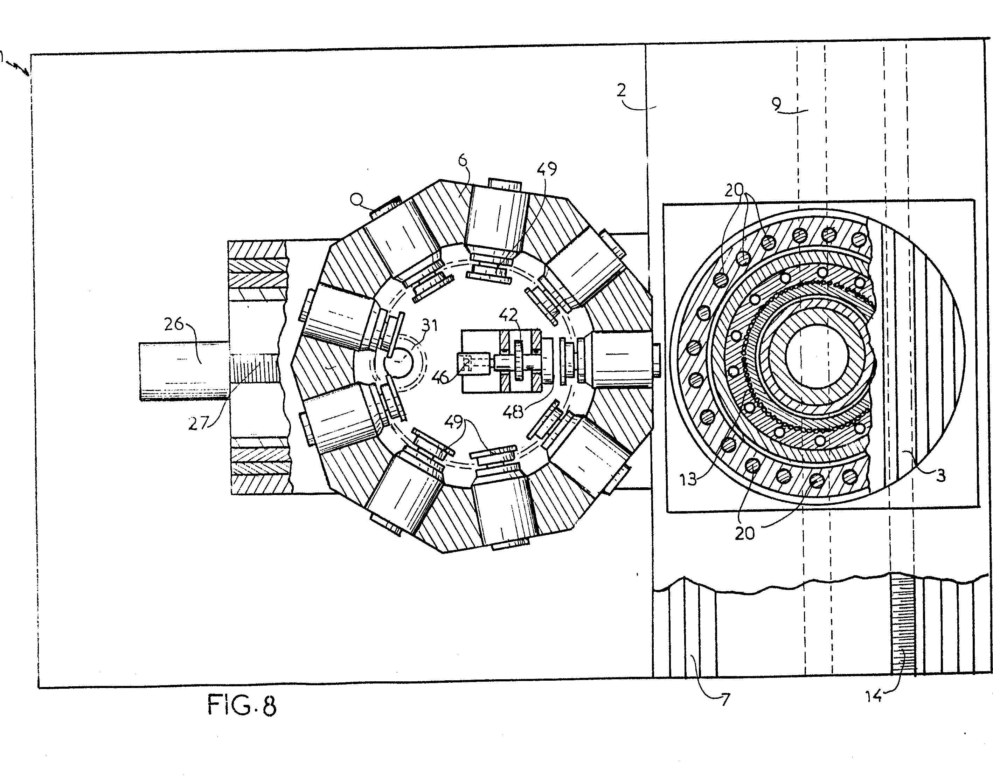

La figure 5 représente une vue partielle semblable à la figure 4, mais la broche porte-outil est représentée en position embrayée, en vue de son entraînement en rotation.

La figure 6 représente une vue partielle en perspective, du dispositif d'indexation circulaire et de blocage de la tourelle, par rapport au chariot.

La figure 7 représente une vue partielle en deux positions, du moyen de verrouillage et de déverrouillage de chaque porte-outil par rapport à sa broche d'entraînement.

La figure 8 représente une vue en plan avec coupes partielles, correspondant à la figure 1.

Conformément à la présente invention, cette machine-outil universelle présente un bâti (1) formant table de guidage d'un chariot transversal (2) unidirectionnel animé d'un mouvement horizontal de translation, avec en superposition un plateau-support tournant (3),avec moyen de commande d'indexation en position angulaire d'usinage, autour de son axe vertical.

- 3 -

0090751

Une console (4) à déplacement vertical, guidée sur la face verticale du bâti (1), supportant un chariot longitudinal (5) disposé perpendiculairement au chariot (2) et muni d'une tourelle polygonale (6) à axe vertical et à positionnement angulaire réglable dont chaque côté extérieur reçoit un ou un groupe de porte-outils appropriés, disposés horizontalement et entraînés circulairement suivant chaque poste de travail, en vue d'obtenir, en combinaison avec l'avance du chariot (5), la ou les opérations d'usinage de la pièce fixée sur le plateau (3), suivant toutes capacités géométriques.

Le chariot transversal (2) guidé longitudinalement par des glissières (7), reçoit axialement à sa base, un écrou (8) pour coopérer avec une vis de manoeuvre (9) entraînée par moteur et transmission (10), en vue d'assurer la commande mécanique en translation dudit chariot horizontal par rapport au bâti (1).

Le plateau (3) centré dans un évidement du chariot (2) tourne librement sur des roulements et butées à billes (11), tandis que son extrémité inférieure forme un nez épaulé ($3^1$) pour autoriser le centrage et la fixation par vis (12) d'une couronne (13) à denture périphérique hélicoïdale ($13^1$).

Une vis sans fin (14) logée transversalement et à libre coulissement à l'intérieur du chariot (2), et entraînée en rotation par moteur et transmission (15), engrène avec la couronne (13) à seule fin d'assurer la rotation angulaire du plateau (3) pour la position d'usinage de la pièce fixée sur ce dernier.

Cette position angulaire du plateau (3), obtenue par commande numérique, est bloquée après réglage, par l'intermédiaire d'une lame métallique (16), en forme de disque, fixée concentriquement sur une collerette inférieure ($3^1$) dudit plateau. La partie débordant circulairement de cette lame (16) s'engage à faible jeu dans une fente correspondante (F) formée entre deux couronnes superposées (17 et 18) assemblées par vis (19) et fixées sur la face extérieure du

- 4 -

0090751

chariot transversal (2).

La face supérieure de la couronne inférieure (17) forme tasseau d'appui de la lame (16), tandis que la couronne supérieure (18) est percée d'une pluralité de chambres ($18^1$) servant de logements respectifs à des pistons (20) reliés hydrauliquement à une rainure circulaire ($18^2$) d'arrivée de fluide. Les pistons (20) munis respectivement d'un joint d'étanchéité (21), sont ainsi sollicités simultanément lors de la mise en pression du fluide, pour exercer un appui ferme sur la lame (16) butée par la couronne (17), de manière à assurer ainsi un blocage efficace en position circulaire du plateau (3).

Selon une réalisation en variante, l'ensemble des pistons (20) peut avantageusement être remplacé par une seule couronne torique, non représentée, mise en communication de par sa face supérieure, avec la rainure ($18^2$), et dont le côté opposé forme une face d'appui sur la lame (16).

Selon ces dispositions, l'on conçoit que le plateau (3) supportant la pièce à usiner, peut être déplacé en translation transversale, tout en pouvant tourner autour de son axe vertical, de manière à occuper des positions précises par rapport à l'axe du porte-outil disposé perpendiculairement, comme indiqué ci-après.

La console (4) à déplacement vertical sur le bâti (1), perpendiculairement à l'axe du chariot (2), est commandée par un moteur (22) agissant par un couple de pignons coniques (23) et écrou, sur une vis verticale (24) solidaire du bâti (1).

A sa partie supérieure, la console permet par des glissières (25), le libre coulissement d'un chariot longitudinal (5) se déplaçant horizontalement et perpendiculairement par rapport au chariot (2), par l'intermédiaire d'un moteur (26) agissant sur une vis de manoeuvre (27) avec écrou (28) solidaire dudit chariot (5).

- 5 -

0090751

Une tourelle (6) de section extérieure polygonale, à neuf côtés dans l'exemple du dessin, tourne par l'intermédiaire de roulements et butées à billes (29), sur une portée axiale ($5^1$) du chariot (5), tandis que des broches horizontales porte-outils convergent radialement et axialement suivant chaque côté extérieur de la tourelle (6).

Cette tourelle (6) est en outre entraînée circulairement par l'intermédiaire d'une couronne dentée (30) fixée en débordement de son évidement vertical, pour engrener avec une roue (31) montée en bout d'un arbre vertical (32) traversant le chariot (5) et avec un moteur d'entraînement.

La tourelle (6) est bloquée circulairement après positionnement et indexage de la broche porte-outils, pour l'opération d'usinage et, de la même façon que pour le plateau (3), par l'intermédiaire d'un disque métallique (33) fixé concentriquement sur l'extrémité inférieure et circulaire de la tourelle (6). Ce disque (33) s'engage dans la fente (F1) formée entre deux couronnes superposées (34 et 35) solidaires du chariot (5), pour être sollicité en poussée, soit par une pluralité de pistons (36) disposés circulairement et reliés à un circuit hydraulique, par l'intermédiaire d'une rainure ($35^1$), soit en variante, par une seule couronne, non représentée, également mise en communication avec ladite rainure ($35^1$). La partie centrale évidée de la tourelle (6) autorise le libre passage d'un bloc boîte de vitesse (37) dont la semelle ($37^1$) prend appui et est fixée directement sur le chariot (5). Ce bloc-boîte de vitesse (37) reçoit en outre à sa partie inférieure, le dispositif de commande d'embrayage et d'entraînement de chaque broche, disposé coaxialement et en regard du plateau (3) recevant la pièce à usiner.

La boîte de vitesse (37) réalisée à la façon connue, avec un arbre d'entrée (38) commandé par un bloc-moteur (39), présente dans l'exemple du dessin, trois rapports de multiplication commandés respectivement par embrayage classique, et un arbre de sortie (40) avec pignon (41) engrenant avec la roue dentée (42) de commande du dispositif d'entraînement de chaque broche.

A cet effet, la roue dentée (42) forme deux portées opposées ($42^1$ - $42^2$) tournant librement, mais à libre coulissement longitudinal, sur des roulements (43 et 44) supportés par le carter de boîte (37), en vue d'un déplacement axial combiné avec l'entraînement en rotation. L'extrémité de la portée arrière ($42^2$) est accouplée en libre rotation et en translation, au moyen de butées à billes (45), à la tige d'un piston (46) de vérin, coulissant dans la chambre ($47^1$) d'un corps (47). Des orifices d'arrivée et d'évacuation du fluide hydraulique permettent le déplacement axial du piston (46) et par suite, de la roue dentée (42), en vue de l'opération d'embrayage, par rapport à l'extrémité de la broche porte-outil placée coaxialement en regard. On remarque, à cet effet, que l'extrémité de la portée avant ($42^1$) est clavetée à un plateau (48) muni d'une denture faciale ($48^1$) qui coopère en appui, avec la denture complémentaire ($49^1$) d'une couronne (49) montée coulissante avec moyen élastique d'appui, en bout de chaque broche (B) recevant l'outil approprié. Ce plateau (48) reçoit également dans son épaisseur un électro-aimant (50) qui coopère, lors de son excitation, avec la couronne (49). En variante, l'électro-aimant (50) est supprimé et c'est le piston (46) du vérin qui agit directement sur le plateau (48) avec une pression suffisante pour enclencher les dentures ($48^1$ - $49^1$).

Selon ces dispositions, lors de l'embrayage de la broche (B), le piston (46) du vérin agit en poussée dans un premier temps, sur la roue dentée (42) qui se déplace en translation en entraînant le plateau (48), tout en ménageant en fin de course un espace de quelques dixièmes de millimètres entre les dentures ($48^1$ et $49^1$), en assurant ainsi un prépositionnement. L'embrayage proprement dit s'effectue dans un deuxième temps, après excitation de l'électro-aimant (50) qui, de par sa force attractive, rappelle la couronne (49) en vue d'accoupler les dentures ($48^1$ et $49^1$) pour l'entraînement de la broche (B). L'on conçoit que le dégagement longitudinal du plateau (48) autorise la rotation de la tourelle (6), par rapport au dispositif d'entraînement, et la présentation unitaire de chaque broche, en vue de son embrayage. Il faut également considérer que cet embrayage s'effectuant en deux temps, permet de supprimer l'effet de poussée engendré par le piston (46) du vérin, sur les dentures ($48^1$ et $49^1$), en évitant leur usure prématurée.

Chacune des broches (B) disposées radialement suivant les côtés polygonaux de la tourelle (6), tourne librement sur des roulements et butées à billes (50 - 51) logés dans un fourreau (52), lui-même emmanché et fixé dans le corps de ladite tourelle, en vue de permettre son extraction.

L'alésage de chaque broche tournante (B) forme en bout une portée conique (B) pour l'emmanchement de la queue (10) de l'outil dont l'extrémité constitue une gorge ($0^1$) qui coopère avec le moyen de verrouillage en position de travail.

A cet effet, une tige-poussoir (53) montée à libre coulissement dans une chambre axiale de la broche (B), reçoit à son extrémité intérieure, une tête (54) munie de trous disposés radialement pour le logement de billes (55). En position de verrouillage de la queue (0) de l'outil, ces billes (55), butées extérieurement de par le logement de la tête (54), émergent et s'engagent dans la gorge ($0^1$) de l'outil, en vue d'assurer son verrouillage. Un ressort (56) intercalé entre le fond de la chambre axiale et l'extrémité épaulée ($53^1$) de la tige-poussoir (53), assure son rappel permanent en position de verrouillage.

Lors du déverrouillage automatique s'effectuant en dehors du poste de travail de l'outil, un vérin non représenté, disposé horizontalement dans le bloc (37), agit de par son piston, sur l'extrémité ($53^1$) de la tige-poussoir (53), en vue du déplacement longitudinal de la tête (54). Les billes (55) se présentent en regard d'un dégagement circulaire (B2) de la broche (B), pour permettre leur effacement, et par suite, le dégagement longitudinal de la queue (0) de l'outil qui peut en outre, être dégagé manuellement. Il est bien évident que chaque broche tournante (B) qui est amovible, peut recevoir des outils spéciaux ou encore une tête multibroches ou outils multilames, suivant les opérations combinées ou successives d'usinage à effectuer.

- 8 -

0090751

Selon les dispositions, l'on conçoit que la tourelle (6) permet de par le positionnement circulaire et l'entraînement respectif en rotation de chacune de ses broches (B) à la vitesse désirée, et placée en regard de la pièce à usiner (P), d'effectuer les opérations successives d'usinage, après réglage en hauteur de ladite tourelle (6) et avance en translation donnée par le chariot (5).

Cette opération d'usinage s'effectue en combinaison avec le réglage en translation de la pièce à usiner donné par le chariot (2), et également par son positionnement circulaire donné par le plateau-support (3).

Il est bien évident que cette machine peut être personnalisée et équipée différemment en de nombreuses variantes, selon les opérations d'usinage à effectuer.

A titre d'exemple, la tourelle (6) ainsi que le bloc-support (37) peuvent être retirés de manière à libérer le chariot (5) sur lequel est alors fixé un ou des outillages spécifiques avec moteur indépendant, tels une unité de fraisage, une unité de perçage ou autre.

De la même façon, le plateau tournant (3) ainsi que le chariot (2) peuvent recevoir également des outillages spécifiques ; la ou les pièces à usiner étant dans ce cas, fixées sur le chariot (5) ou sur la tourelle (6).

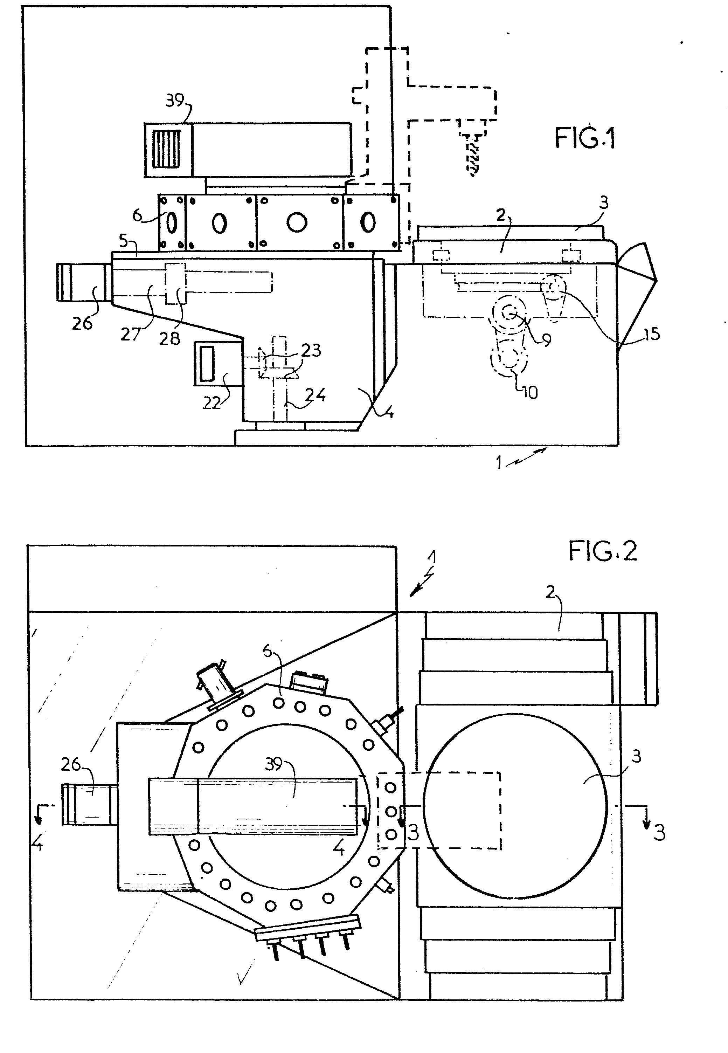

Il faut considérer également que la tourelle (6) peut autoriser de par ses faces périphériques et de par sa partie supérieure équipées de moyens d'appui et de fixation, tels que trous taraudés, le montage de têtes d'usinage autonomes avec broche d'outil disposée soit verticalement ou horizontalement, soit encore réglable angulairement, comme illustré par le tracé en traits mixtes, figure 1.

Cette machine constitue donc un centre d'usinage pour toutes pièces s'inscrivant dans sa capacité géométrique, indépendamment de l'importance de la série et de la grandeur des lots.

0090751

Il est bien évident que tous les déplacements des organes de la machine sont asservis par commande numérique et qu'elle peut être intégrée dans un atelier flexible.

- 10 -

0090751

Revendications.

1. Machine-outil universelle avec une pluralité de postes d'usinage à broches horizontales,constituant un centre d'usinage, caractérisée par le fait qu'elle comprend une tourelle d'usinage (6) porte-outils, à broches horizontales (B) avec moyen d'entraînement en position circulaire indexée, et dispositif d'embrayage et d'entraînement respectif de chaque broche (B) en phase d'usinage ; ladite tourelle (6) étant fixée tournante sur un chariot (5) avec dispositif de déplacement longitudinal, sur une console (4) mobile verticalement et guidée sur un bâti (1), au moyen d'un dispositif de déplacement en hauteur ; un chariot transversal (2) à déplacement unidirectionnel, perpendiculaire au déplacement du chariot (5), coulissant à la partie supérieure dudit bâti, au moyen d'un dispositif de commande; un plateau-support (3) fixé sur le chariot (2) avec moyen d'entraînement en position circulaire indexée, pour supporter la pièce à usiner, suivant les coordonnées des opérations d'usinage s'effectuant par déplacement de la tourelle (6).

2. Machine selon la revendication 1, dans laquelle le chariot transversal (2) coulissant sur le bâti (1) reçoit axialement un écrou (8) dans lequel se déplace une vis de manoeuvre (9) entraînée par moteur et transmission (10), en vue de son déplacement mécanique en translation.

3. Machine selon la revendication 1, dans laquelle le plateau-support (3) tourne librement dans un évidement du chariot (2) et forme à sa base un épaulement ($3^1$) pour le centrage et la fixation d'une couronne dentée (13) qui engrène avec une vis sans fin (14) logée à l'intérieur dudit chariot (2) et entraînée par moteur et transmission (15), de manière à permettre la rotation dudit plateau (3).

4. Machine selon la revendication 1, dans laquelle la rotation du plateau-support (3) est bloquée après indexation par un disque (16) fixé concentriquement à la base dudit plateau (3), pour s'engager circulairement et tourner dans l'intérieur d'une fente (F) formée entre deux couronnes superposées (17 et 18) solidaires du chariot (2) ; la couronne inférieure (17) formant appui, tandis que la couronne supérieure (18) reçoit dans son épaisseur, une pluralité de pistons (20) disposés circulairement et mis ensemble en communication avec une rainure circulaire ($18^2$) d'admission du fluide hydraulique ; lesdits pistons (20) agissant simultanément en pression sur le disque (16), en vue d'obtenir son blocage en rotation sur la couronne (17) formant tasseau, et par suite, le blocage circulaire dudit plateau (3).

5. Machine selon la revendication 4, dans laquelle, en variante, les pistons (20) sont remplacés par une couronne mise en communication de par sa face supérieure, avec la rainure circulaire ($18^2$), ladite couronne agissant en pression sur le disque (16).

6. Machine selon la revendication 1, dans laquelle la console (4) coulissant verticalement sur le bâti (1), est commandée dans son déplacement en hauteur, par un moteur (22) agissant de par l'intermédiaire d'un couple de pignons coniques (23), sur une vis verticale (24) solidaire dudit bâti (1) ; ladite console (4) permettant le coulissement du chariot (5) perpendiculaire au chariot (2), au moyen d'un moteur (26) entraînant une vis (27) coopérant avec un écrou (28) solidaire dudit chariot (5).

7. Machine selon la revendication 1, dans laquelle la tourelle (6) de section polygonale évidée, avec une pluralité de broches radiales horizontales porte-outils, porte à sa base, une couronne dentée (30) engrenant avec une roue (31) montée en bout d'un arbre vertical (32) avec moteur d'entraînement.

8. Machine selon la revendication 1, dans laquelle la tourelle (6) est bloquée circulairement après positionnement de chaque broche (B) en phase d'usinage, par un disque (33) fixé concentriquement à sa base, pour s'engager circulairement et tourner dans l'intérieur d'une fente (F1) formée entre deux couronnes superposées (34 et 35) solidaires du chariot (5), ledit disque (33) étant sollicité en appui par une pluralité de pistons (36), ou par une seule couronne mise en communication avec une rainure circulaire ($35^1$) d'admission du fluide hydraulique, en vue d'obtenir son blocage en rotation et par suite, celui de ladite tourelle (6).

9. Machine selon la revendication 1, cans laquelle le chariot (5) autorise la fixation à demeure d'un bloc boîte de vitesse (37) à plusieurs rapports, avec à sa base, le dispositif d'embrayage et d'entraînement de chaque broche en phase d'usinage ; ledit bloc (37) traversant librement l'ouverture de la tourelle rotative (6) supportant le moteur (39) d'entraînement de l'arbre primaire, tandis que l'arbre de sortie (40) supporte un pignon (41) qui engrène avec la roue dentée (42) d'entraînement et d'embrayage de chaque broche (B).

10. Machine selon la revendication 9, dans laquelle la roue (42) d'entraînement de chaque broche (B) en position d'alignement, est sollicitée, dans un mouvement longitudinal et axial, par un piston de vérin (46) coulissant dans un corps (47), en vue de présenter son plateau extrême (48) denté facialement en ($48^1$), en regard et en position pré-embrayée, de la denture complémentaire ($49^1$) d'une couronne (49) accouplée élastiquement en bout de ladite broche (B) ; ledit plateau extrême (48) recevant en outre dans son épaisseur, un électro-aimant (50) qui coopère de par son excitation, avec la couronne (49), en vue de l'embrayage et l'accouplement des dentures ($48^1$ - $49^1$) pour l'entraînement en rotation de la broche (B).

11. Machine selon la revendication 10, dans laquelle, en variante, le piston de vérin (46) agit directement de par son plateau extrême (48) en vue de l'accouplement des dentures ($48^1$ - $49^1$), pour l'entraînement en rotation de la broche (B).

12. Machine selon la revendication 10, dans laquelle chaque broche (B) tourne librement dans un fourreau (52) emmanché dans le corps de la tourelle (6), tout en étant alésée pour recevoir la queue (0) de l'outil dont l'extrémité coopère avec une tête (54) solidaire d'un tige poussoir (53) ; des billes (55) qui débouchent raidalement de ladite tête (54) en tangentant l'alésage de cette dernière, pour émerger dans une gorge ($0^1$) de l'outil, en vue d'assurer son verrouillage, tandis qu'en position de déverrouillage, le déplacement de la tige-poussoir (53) à l'encontre d'un ressort (56), permet le débordement extérieur desdites billes (55) dans un dégagement ($B^2$) de la broche (B).

13. Machine selon la revendication 12, dans laquelle chaque vérin disposé horizontalement dans le bloc-support (37) de la boîte de vitesse, agit de par son piston sur l'extrémité ($53^1$) de la tige-poussoir (53) débouchant dans l'ouverture de la tourelle (6), dans une position angulaire de la broche (B) autre que celle de son embrayage pour l'opération d'usinage.

14. Machine selon la revendication 12, dans laquelle chaque broche (B) peut recevoir des outils spéciaux ou une tête multibroches ou outils multilames.

15. Machine selon la revendication 1, dans laquelle la tourelle (6) est établie suivant sa face supérieure et sur chaque pan avec des moyens d'appui et de fixation, pour le montage de têtes autonomes d'usinage avec outils disposés verticalement, horizontalement ou réglables angulairement, disposés en regard du plateau (3).

FIG.1

FIG.2

0090751

2/4

FIG 5

FIG.6

FIG.7

FIG.3

FIG.4

3/4

0090751

FIG.8